# EUROPEAN PATENT SPECIFICATION

(11) **EP 2 292 034 B1**
(45) Date of publication and mention of the grant of the patent: **10.02.2016**
(21) Application number: 08749309.4
(22) Date of filing: 02.05.2008
(51) Int. Cl.: H04W 16/14

(54) **METHOD, SYSTEM, BASE STATION AND SIGNAL FOR COMMUNICATING PLANNED FUTURE CELL SYSTEM INFORMATION IN A RADIO TELECOMMUNICATION NETWORK**
VERFAHREN, SYSTEM, BASISSTATION UND SIGNAL ZUM ÜBERMITTELN VON ZUKÜNFTIGEN GEPLANTEN ZELLSYSTEMINFORMATIONEN IN EINEM FUNKTELEKOMMUNIKATIONSNETZ
PROCÉDÉ, SYSTÈME, STATION DE BASE ET SIGNAL SERVANT À COMMUNIQUER DES INFORMATIONS FUTURES PLANIFIEES DE SYSTEME RELATIVES À UNE CELLULE DANS UN RÉSEAU DE TÉLÉCOMMUNICATIONS RADIO

(43) Date of publication of application: 09.03.2011
(73) Proprietor: Nokia Solutions and Networks Oy, 02610 Espoo (FI)
(72) Inventor: FREDERIKSEN, Frank, DK-9270 Klarup (DK); MOGENSEN, Preben, DK-9260 Gistrup (DK)
(74) Representative: Borgström, Markus
(86) International application number: PCT/EP2008/003570
(87) International publication number: WO 2009/132674

(56) References cited:
- WO-A-98/39939
- WO-A-2007/051389
- US-A1- 2005 153 700
- US-A1- 2006 182 075
- US-A1- 2007 287 469

## Description

### FIELD OF THE INVENTION

The present invention relates to a method, a system, a base station and a computer program for communicating cell system informations to be used in conjunction with the sharing of physical spectrum resources among base stations in a radio telecommunication network including a plurality of base stations and at least a mobile station.

### BACKGROUND OF THE INVENTION

In a radio telecommunication network, there is provided a broadcast channel (BCH) for support of a spectrum sharing and flexible spectrum usage (FSU), which is an important issue, in particular for local area deployment. The FSU concept allows multiple operators to share the same frequency spectrum in a decentralized manner using policy based radio resource optimization.

The FSU concept is expected to be implemented in decentralized and uncoordinated manner, where there are a lot of independent base stations (BS), potentially belonging to different operators, which are not connected to each other, but on the other hand they are targeting at sharing the same physical spectrum resources according to certain policies.

The problem of having such a flexible sharing of spectrum among several operators is that the users need to be informed on the current radio parameter configuration of the base station. This requires the transmission of some broadcast information which will typically be sent via the broadcast channel. Normally, the broadcast channel is seen as a static entity which is used as a constant and periodical time-frequency resource and is provided for transmitting semi-static pieces of information - at least in typical cellular network configurations like e.g. GSM (global system for mobile communications), UMTS (universal mobile telecommunication system), and LTE (long term evaluation project). However, when the cell configuration varies in a more frequent manner, mechanisms are needed to handle the time variability of the used pieces of cell system information. If this is not provided, there is a high risk that all users are dropped from the system whenever the cell system parameters are changed.

Prior art document US 2005/0153700 A1 describes broadcasting system information change indications by a base station for informing that the system information change is to be implemented by a User Equipment at a deferred time. A Message Information Block (MIB) is re-read by the User Equipment during a time period set by a deferred time information change timer to ensure a deferred system information change is not missed.

### SUMMARY OF THE INVENTION

It is an object of the present invention to solve the aforementioned problem, and in particular to suggest a mechanism which is able to successfully handle even a higher time variability of the used pieces of cell system information and to reduce or even avoid the risk that users are dropped from the system whenever the cell system parameters are changed.

In order to achieve the above and further objects, according to a first aspect of the present invention, there is provided a method for communicating cell system informations to be used in conjunction with the sharing of physical spectrum resources among base stations in a radio telecommunication network including a plurality of base stations and at least a mobile station according to the subject-matter of independent Claim 1.

In accordance with a second aspect of the present invention, there is provided a system for communicating cell system informations to be used in conjunction with the sharing of physical spectrum resources among base stations in a radio telecommunication network including a plurality of base stations and at least a mobile station according to the subject-matter of independent Claim 10.

According to a third aspect of the present invention, there is provided a base station in a radio telecommunication network including a plurality of base stations and at least a mobile station according to the subject-matter of independent Claim 11.

According to a fourth aspect of the present invention, there is provided a computer program adapted to carry out a method according to the first aspect.

Further exemplary embodiments and modifications of the present invention are defined in the dependent claims.

It has been found that, if the system configuration of one cell is changed without this being known to the adjacent cells in advance, the set of cells within a system or sub-system cannot jointly optimize their spectrum usage according to certain policies. According to the concept of the present invention, future cell system parameters relating to a predetermined future cell configuration of one cell are advertised to adjacent cells resulting in a joint optimization of the FSU procedure. Preferably, there is provided a broadcast channel (BCH) which supports synchronous semi-dynamic cell system information updates, while supporting FSU and reducing UE power consumption. The broadcast channel may include the current used cell system information and/or also advertise the cell system information to be used at a certain time into the future. A system Information content switching is required in order to effectively support FSU, i.e. the cell is able to adaptively adjust its settings e.g. according to the load and interference situation. A timer is included in the broadcast channel to indicate the time instant when the advertised system information will take place. The timer value can include information whether the advertised system information will be used or only tentatively intended for FSU negotiation with other nodes.

It is noted here that the present invention is provided for communicating not only cell system informations, but also a cell system information or pieces thereof.

Further embodiments, details, advantages and modifications of the present invention will become apparent from the following detailed description of an exemplary embodiment.

### DESCRIPTION OF AN EXEMPLARY EMBODIMENT

In the following, the concept of the present invention will be described in a more detailed level.

From a conceptual level, it is suggested that the broadcast channel is adapted to transmit a set of cell system parameters which relate to the current or the future cell configuration. It is also suggested that the broadcast channel includes a counter field which indicates the approximate or exact time when changes take effect. One example for this could be a 3-bit field where the values could for instance mean:

| Signalled value | Time to change |
|---|---|
| 111 | In more than 5 minutes, there will be a change to the new parameters (or parameters might not change at all) |
| 110 | In 1-5 min, there will be a change to the new parameters |
| 101 | In 10-60 s, there will be a change to the new parameters |
| 100 | In 2-10 s, there will be a change to the new parameters |
| 011 | In 500-2000 ms, there will be a change to the new parameters |
| 010 | In 100-500 ms, there will be a change to the new parameters |
| 001 | In 20-100 ms, there will be a change to the new parameters |
| 000 | In 0-20 ms, there will be a change to the new parameters |

It should be noted that the above values are exemplary and could take different values. The timer values could also have a meaning where e.g. "1XX" indicates only a tentative change, but the user equipment or mobile station needs to listen until the time has a value of "0XX" before a decision as to a system information change is finally made by the base station.

An expected behaviour of the system using the aforementioned concept is described as follows.

When a base station indicates to the system over the broadcast channel that a change is about to happen, the following set of actions can be foreseen:
- The mobile station which is connected to this communicating or originating base station is informed of a change and the time this change will happen, by listening to the broadcast channel on a regular basis.
- Other base stations are listening to the originating base station. The other base stations can decode the next or future cell system parameters and find out whether there will be a conflict with the originating base station and update their own parameters accordingly. In principle a negotiation of resources can take place among base stations before the base stations finally decide to update their cell configuration and system information broadcasted on the broadcast channel.
- In order to improve such information and negotiation between base stations, a mobile station connected to another base station different from the originating base station is capable of listening to the originating base station broadcast channel. This mobile station can potentially forward the future system information communicated from the originating base station as control plane information, such that the other base station can take action according to the new expected usage from the originating base station.

In this way there is provided a control mechanism to handle the adjustment and negotiation of different base station configurations for an optimized FSU.

The above described method may be implemented by computer software or by computer hardware or by a combination of computer software and hardware, preferably in the memory and processor of the base stations.

It should be noted that in the aforementioned exemplary embodiment the broadcast channel is used as a non-limiting example. Other non-limiting examples of common control channels for conveying this information are for instance primary and secondary synchronization channels and dynamic broadcast channels. Further, message blocks for transmitting system information could also be considered as non-limited examples.

Finally, it should be noted that the above described embodiment is of an example for implementing the present invention, but the scope of the present invention should not necessarily be limited by the above description. The scope of the present invention is defined by the following claims.

## Claims

1. A method for communicating cell system information to be used in conjunction with the sharing of physical spectrum resources among base stations in a radio telecommunication network including a plurality of base stations and at least a mobile station, wherein for updating cell system information a base station communicates at least a first information about future cell system parameters relating to a predetermined future cell configuration of said communicating base station, wherein said communicating base station additionally communicates second information which indicates a time or a time range when said future cell system parameters will take effect and that said communicating base station only tentatively intends to change to the predetermined future cell configuration.

2. The method according to claim 1, wherein said second information includes a variable value indicating the time which is still required before said future cell system information parameters will take effect.

3. The method according to claim 1 or 2, wherein said second information includes additional information about that a flexible spectrum usage negotiation with other base stations is tentatively intended only, or that said communicating base station will use the future cell system information parameters for a negotiation as to the physical spectrum resources.

4. The method according to any one of the preceding claims, wherein said communicating base station communicates further information about current cell system parameters relating to a current cell configuration of said base station.

5. The method according to any one of the preceding claims, wherein said information is transmitted via a broadcast channel.

6. The method according to any one of the preceding claims, wherein other base stations different from said communicating base station receive at least said first information from said communicating base station and make a check whether or not there will be a conflict with said communicating base station.

7. The method according to claim 6, wherein said other base station(s) update(s) its (their) own cell configuration in accordance with said first information.

8. The method according to claim 6 or 7, wherein a negotiation as to resources takes place among said base stations before they will make a final decision whether or not to update their cell configuration.

9. The method according to any one of the preceding claims, wherein a mobile station connected to another base station different from said communicating base station receives at least said first information from said communicating base station and forwards them to said other base station.

10. A system for communicating cell system information to be used in conjunction with the sharing of physical spectrum resources among base stations in a radio telecommunication network including a plurality of base stations and at least a mobile station, wherein for updating cell system information a base station is adapted to communicate at least a first information about future cell system parameters relating to a predetermined future cell configuration of said communicating base station and second information which indicates a time or a time range when said future cell system parameters will take effect and that said communicating base station only tentatively intends to change to the predetermined future cell configuration

11. A base station for communicating cell system information to be used in conjunction with the sharing of physical spectrum resources among base stations in a radio telecommunication network including a plurality of base stations and at least a mobile station, comprising a generator for generating at least a first information about future cell system parameters relating to a predetermined future cell configuration of said base station and second information which indicates a time or a time range when said future cell system parameters will take effect and that said communicating base station only tentatively intends to change to the predetermined future cell configuration, and
a transmitter for transmitting said first information for updating cell system information and second information which indicates a time or a time range when said future cell system parameters will take effect and that said communicating base station only tentatively intends to change to the predetermined future cell configuration to be used in conjunction with the sharing of physical spectrum resources among base stations.

12. The base station according to claim 11 wherein said second information includes an additional information about that a flexible spectrum usage negotiation with other base stations is tentatively intended only, or that said base station will use the future cell system information parameters for a negotiation as to the physical spectrum resources.

13. The base station according to any one of claims 11 to 12 wherein said generator is adapted to generate further information about current cell system parameters relating to a current cell configuration of said base station, and said transmitter is adapted to additionally communicate said further information.

14. The base station according to any one of claims 11 to 13 wherein said transmitter is adapted to provide a broadcast channel for transferring said information.

15. The base station according to any one of claims 11 to 14 further comprising a receiver for receiving at least said first information communicated from another base station, and an analyzer for making a check whether or not there will be a conflict with said other communicating base station.

16. The base station according to claim 15 further comprising an updater for updating its cell configuration in accordance with said first information received.

17. The base station according to claim 16 further comprising a negotiator for carrying out a negotiation as to resources with said other communicating base station, and said updater is adapted to make a final decision whether or not to update the cell configuration in accordance with the result of said negotiation.

18. A computer program adapted to carry out a method according to at least any one of the claims 1 to 9 when run on a computer device.

## Patentansprüche

1. Verfahren zum Übertragen von Zellensysteminformationen, die im Zusammenhang mit dem gemeinsamen Benutzen von Betriebsmitteln des physikalischen Spektrums zwischen den Basisstationen in einem Funkkommunikationsnetz, das mehrere Basisstationen und wenigstens eine Mobilstation enthält, zu verwenden sind, wobei für das Aktualisieren der Zellensysteminformationen eine Basisstation wenigstens erste Informationen über die künftigen Zellensystemparameter bezüglich einer vorgegebenen künftigen Zellenkonfiguration der übertragenden Basisstation überträgt, wobei die übertragende Basisstation außerdem zweite Informationen überträgt, die einen Zeitpunkt oder einen Zeitbereich, wann die künftigen Zellensystemparameter wirksam werden, und dass die übertragende Basisstationen nur versuchsweise beabsichtigt, die vorgegebene künftige Zellenkonfiguration zu ändern, angeben.

2. Verfahren nach Anspruch 1, wobei die zweiten Informationen einen variablen Wert enthalten, der den Zeitraum angibt, der immer noch erforderlich ist, bevor die künftigen Zellensysteminformationsparameter wirksam werden.

3. Verfahren nach Anspruch 1 oder 2, wobei die zweiten Informationen zusätzliche Informationen darüber enthalten, dass eine Verhandlung über die flexible Verwendung des Spektrums mit anderen Basisstationen nur versuchsweise beabsichtigt ist oder dass die übertragende Basisstation die künftigen Zellensysteminformationsparameter für eine Verhandlung bezüglich der Betriebsmittel des physikalischen Spektrums verwendet.

4. Verfahren nach einem der vorhergehenden Ansprüche, wobei die übertragende Basisstation weitere Informationen über die aktuellen Zellensystemparameter bezüglich einer aktuellen Zellenkonfiguration der Basisstation überträgt.

5. Verfahren nach einem der vorhergehenden Ansprüche, wobei die Informationen über einen Rundsendekanal gesendet werden.

6. Verfahren nach einem der vorhergehenden Ansprüche, wobei andere Basisstationen, die von der übertragenden Basisstation verschieden sind, wenigstens die ersten Informationen von der übertragenden Basisstation empfangen und eine Prüfung ausführen, ob es einen Konflikt mit der übertragenden Basisstation gibt oder nicht.

7. Verfahren nach Anspruch 6, wobei die andere(n) Basisstation(en) ihre eigene Zellenkonfiguration gemäß den ersten Informationen aktualisiert (aktualisieren).

8. Verfahren nach Anspruch 6 oder 7, wobei die Verhandlung bezüglich der Betriebsmittel zwischen den Basisstationen stattfindet, bevor sie eine endgültige Entscheidung treffen, ob sie ihre Zellenkonfiguration aktualisieren oder nicht.

9. Verfahren nach einem der vorhergehenden Ansprüche, wobei eine Mobilstation, die mit einer weiteren Basisstation, die von der übertragenden Basisstation verschieden ist, verbunden ist, wenigstens die ersten Informationen von der übertragenden Basisstation empfängt und sie zu der anderen Basisstation weiterleitet.

10. System zum Übertragen von Zellensysteminformationen, die im Zusammenhang mit dem gemeinsamen Benutzen von Betriebsmitteln des physikalischen Spektrums zwischen den Basisstationen in einem Funkkommunikationsnetz, das mehrere Basisstationen und wenigstens eine Mobilstation enthält, zu verwenden sind, wobei für das Aktualisieren der Zellensysteminformationen eine Basisstation dafür ausgelegt ist, wenigstens erste Informationen über die künftigen Zellensystemparameter bezüglich einer vorgegebenen künftigen Zellenkonfiguration der übertragenden Basisstation und zweite Informationen, die einen Zeitpunkt oder einen Zeitbereich, wann die künftigen Zellensystemparameter wirksam werden, und dass die übertragende Basisstationen nur versuchsweise beabsichtigt, die vorgegebene künftige Zellenkonfiguration zu ändern, angeben, zu übertragen.

11. Basisstation zum Übertragen von Zellensysteminformationen, die im Zusammenhang mit dem gemeinsamen Benutzen von Betriebsmitteln des physikalischen Spektrums zwischen den Basisstationen in einem Funkkommunikationsnetz, das mehrere Basisstationen und wenigstens eine Mobilstation enthält, zu verwenden sind, die einen Generator zum Erzeugen wenigstens erster Informationen über die künftigen Zellensystemparameter bezüglich einer vorgegebenen künftigen Zellenkonfiguration der Basisstation und zweiter Informationen, die einen Zeitpunkt oder einen Zeitbereich, wann die künftigen Zellensystemparameter wirksam werden, und dass die übertragende Basisstationen nur versuchsweise beabsichtigt, die vorgegebene künftige Zellenkonfiguration zu ändern, angeben, und
einen Sender zum Senden der ersten Informationen zum Aktualisieren der Zellensysteminformationen und der zweiten Informationen, die einem Zeitpunkt oder einen Zeitbereich, wann die künftigen Zellensystemparameter wirksam werden, und dass die übertragende Basisstationen nur versuchsweise beabsichtigt, die vorgegebene künftige Zellenkonfiguration zu ändern, angeben, die im Zusammenhang mit dem gemeinsamen Benutzen von Betriebsmitteln des physikalischen Spektrums zwischen den Basisstationen zu verwenden sind, umfasst.

12. Basisstation nach Anspruch 11, wobei die zweiten Informationen zusätzliche Informationen darüber enthalten, dass die Verhandlung über die flexible Verwendung des Spektrums mit anderen Basisstationen nur versuchsweise beabsichtigt ist oder dass die Basisstation die künftigen Zellensysteminformationsparameter für eine Verhandlung bezüglich der Betriebsmittel des physikalischen Spektrums verwendet.

13. Basisstation nach einem der Ansprüche 11 bis 12, wobei der Generator dafür ausgelegt ist, weitere Informationen über die aktuellen Zellensystemparameter bezüglich einer aktuellen Zellenkonfiguration der Basisstation zu erzeugen, wobei der Sender dafür ausgelegt ist, die weiteren Informationen zusätzlich zu übertragen.

14. Basisstation nach einem der Ansprüche 11 bis 13, wobei der Sender dafür ausgelegt ist, einen Rundsendekanal zum Übertragen der Informationen bereitzustellen.

15. Basisstation nach einem der Ansprüche 11 bis 14, die ferner einen Empfänger zum Empfangen wenigstens der ersten Informationen, die von einer weiteren Basisstation übertragen werden, und einen Analysator zum Ausführen einer Prüfung, ob es einen Konflikt mit der anderen übertragenden Basisstation gibt oder nicht, umfasst.

16. Basisstation nach Anspruch 15, die ferner eine Aktualisierungseinrichtung zum Aktualisieren ihrer Zellenkonfiguration gemäß den empfangenen ersten Informationen umfasst.

17. Basisstation nach Anspruch 16, die ferner eine Verhandlungseinrichtung zum Ausführen einer Verhandlung bezüglich der Betriebsmittel mit der anderen übertragenden Basisstation umfasst, wobei die Aktualisierungseinrichtung dafür ausgelegt ist, gemäß dem Ergebnis der Verhandlung eine endgültige Entscheidung zu treffen, ob die Zellenkonfiguration aktualisiert wird oder nicht.

18. Computerprogramm, das dafür ausgelegt ist, ein Verfahren nach wenigstens einem der Ansprüche 1 bis 9 auszuführen, wenn es in einer Computervorrichtung ausgeführt wird.

## Revendications

1. Un procédé de communication d'informations de système cellulaire destiné à être utilisé conjointement avec le partage de ressources spectrales physiques entre des stations de base dans un réseau de télécommunications radioélectriques comprenant une pluralité de stations de base et au moins une station mobile, dans lequel, pour actualiser des informations de système cellulaire, une station de base communique au moins une première information relative à des paramètres de système cellulaire futurs portant sur une configuration de cellules future prédéterminée de ladite station de base en communication, dans lequel ladite station de base en communication communique de manière additionnelle une deuxième information qui indique une heure, ou une plage temporelle, à laquelle lesdits paramètres de système cellulaire futurs prendront effet et que ladite station de base en communication a l'intention de modifier uniquement provisoirement la configuration de cellules future prédéterminée.

2. Le procédé selon la revendication 1, dans lequel ladite deuxième information comprend une valeur variable indiquant le temps qui est encore requis avant que lesdits paramètres d'informations de système cellulaire futurs ne prennent effet.

3. Le procédé selon la revendication 1 ou 2, dans lequel ladite deuxième information comprend des informations additionnelles concernant le fait qu'une négociation d'utilisation du spectre flexible avec d'autres stations de base est prévue provisoirement seulement, ou que ladite station de base en communication utilisera les paramètres d'informations de système cellulaire futurs pour une négociation concernant les ressources spectrales physiques.

4. Le procédé selon l'une quelconque des revendications précédentes, dans lequel ladite station de base en communication communique d'autres informations relatives à des paramètres de système cellulaire actuels portant sur une configuration de cellules actuelle de ladite station de base.

5. Le procédé selon l'une quelconque des revendications précédentes, dans lequel lesdites informations sont transmises par l'intermédiaire d'un canal de radiodiffusion.

6. Le procédé selon l'une quelconque des revendications précédentes, dans lequel d'autres stations de base différentes de ladite station de base en communication reçoivent au moins ladite première information à partir de ladite station de base en communication et vérifient si ou non il y aura un conflit avec ladite station de base en communication.

7. Le procédé selon la revendication 6, dans lequel ladite (lesdites) autre(s) station(s) de base actualise(nt) sa (ses) propre(s) configuration(s) de cellules conformément à ladite première information.

8. Le procédé selon la revendication 6 ou 7, dans lequel une négociation concernant des ressources a lieu entre lesdites stations de base avant qu'elles ne prennent une décision finale indiquant s'il convient ou non d'actualiser leur configuration de cellules.

9. Le procédé selon l'une quelconque des revendications précédentes, dans lequel une station mobile raccordée à une autre station de base différente de ladite station de base en communication reçoit au moins ladite première information de ladite station de base en communication et la transmet à ladite autre station de base.

10. Un système de communication d'informations de système cellulaire destiné à être utilisé conjointement avec le partage de ressources spectrales physiques entre des stations de base dans un réseau de télécommunications radioélectriques comprenant une pluralité de stations de base et au moins une station mobile, dans lequel, pour actualiser des informations de système cellulaire, une station de base est adaptée de façon à communiquer au moins une première information relative à des paramètres de système cellulaire futurs portant sur une configuration de cellules future prédéterminée de ladite station de base en communication et une deuxième information qui indique une heure, ou une plage temporelle, à laquelle lesdits paramètres de système cellulaire futurs prendront effet et que ladite station de base en communication a l'intention de modifier uniquement provisoirement la configuration de cellules future prédéterminée.

11. Une station de base destinée à la communication d'informations de système cellulaire destinée à être utilisée conjointement avec le partage de ressources spectrales physiques entre des stations de base dans un réseau de télécommunications radioélectriques comprenant une pluralité de stations de base et au moins une station mobile, comprenant un générateur destiné à la génération d'au moins une première information relative à des paramètres de système cellulaire futurs portant sur une configuration de cellules future prédéterminée de ladite station de base et une deuxième information qui indique une heure, ou une plage temporelle, à laquelle lesdits paramètres de système cellulaire futurs prendront effet et que ladite station de base en communication a l'intention de modifier uniquement provisoirement la configuration de cellules future prédéterminée, et
un émetteur destiné à la transmission de ladite première information destinée à actualiser des informations de système cellulaire et une deuxième information qui indique une heure, ou une plage temporelle, à laquelle lesdits paramètres de système cellulaire futurs prendront effet et que ladite station de base en communication a l'intention de modifier uniquement provisoirement la configuration de cellules future prédéterminée à utiliser conjointement avec le partage de ressources spectrales physiques entre des stations de base.

12. La station de base selon la revendication 11 dans laquelle ladite deuxième information comprend des informations additionnelles concernant le fait qu'une négociation d'utilisation du spectre flexible avec d'autres stations de base est prévue provisoirement seulement, ou que ladite station de base utilisera les paramètres d'informations de système cellulaire futurs pour une négociation concernant les ressources spectrales physiques.

13. La station de base selon l'une quelconque des revendications 11 à 12 dans laquelle ledit générateur est adapté de façon à générer d'autres informations relatives à des paramètres de système cellulaire actuels portant sur une configuration de cellules actuelle de ladite station de base, et ledit émetteur est adapté de façon à communiquer de manière additionnelle lesdites autres informations.

14. La station de base selon l'une quelconque des revendications 11 à 13, dans laquelle ledit émetteur est adapté de façon à fournir un canal de radiodiffusion pour le transfert desdites informations.

15. La station de base selon l'une quelconque des revendications 11 à 14 comprenant en outre un récepteur destiné à recevoir au moins ladite première information communiquée à partir d'une autre station de base, et un dispositif d'analyse destiné à vérifier si ou non il y aura un conflit avec ladite autre station de base en communication.

16. La station de base selon la revendication 15 comprenant en outre un dispositif d'actualisation destiné à actualiser sa configuration d'appel conformément à ladite première information reçue.

17. La station de base selon la revendication 16 comprenant en outre un dispositif de négociation destiné à l'exécution d'une négociation concernant des ressources avec ladite autre station de base en communication, et ledit dispositif d'actualisation est adapté de façon à prendre une décision finale indiquant s'il convient ou non d'actualiser la configuration de cellules conformément au résultat de ladite négociation.

18. Un programme informatique adapté de façon à exécuter un procédé selon au moins une quelconque des revendications 1 à 9 lorsqu'il est exécuté sur un dispositif informatique.
